# EUROPEAN PATENT SPECIFICATION

(11) **EP 3 361 352 B1**
(45) Date of publication and mention of the grant of the patent: **05.06.2019**
(21) Application number: 17155154.2
(22) Date of filing: 08.02.2017
(51) Int. Cl.: G06F 3/01, G06F 3/03, B60K 35/00, G02B 27/00

(54) **GRAPHICAL USER INTERFACE SYSTEM AND METHOD, PARTICULARLY FOR USE IN A VEHICLE**
SYSTEM UND VERFAHREN FÜR EINE GRAFISCHE BENUTZERSCHNITTSTELLE, INSBESONDERE ZUR VERWENDUNG IN EINEM FAHRZEUG
SYSTÈME D'INTERFACE UTILISATEUR GRAPHIQUE ET PROCÉDÉ, EN PARTICULIER DESTINÉ À ÊTRE UTILISÉ DANS UN VÉHICULE

(43) Date of publication of application: 15.08.2018
(73) Proprietor: Alpine Electronics, Inc., Tokyo (JP)
(72) Inventor: Lach, Bruno, 70567 Stuttgart (DE)
(74) Representative: Schmitt-Nilson Schraud Waibel Wohlfrom Patentanwälte Partnerschaft mbB

(56) References cited:
- US-A1- 2012 229 596
- US-A1- 2014 292 665
- US-A1- 2016 098 093
- US-A1- 2016 140 760
- US-A1- 2016 185 220

## Description

The present invention relates to a graphical user interface system and a method of displaying a graphical user interface on a display device, particularly for use in a vehicle. Further, the invention relates to a corresponding computer program product and to a vehicle comprising such graphical user interface system.

Presently, apparatuses are known in the art which, for example, comprise one or more sensor devices which detect the approaching of an object to be detected, for example an object of a human such as a human's finger or hand, approaching a graphical user interface (GUI) of an automotive input device. For example, when a user's hand approaches the GUI of the input device and/or performs a certain gesture, for example in front of a head unit of an automobile, a particular function of the head unit may be controlled. For example, when the user's hand is approaching the head unit, a GUI displayed on the display device of the head unit may be switched to perform a particular input function. Further, some known input apparatuses additionally track the user's line of vision for controlling of particular graphical content of the GUI by tracking, e.g., the user's eyes.

For example, EP 2 523 069 A discloses a user interface technology that provides feedback to the user based on the user's gaze and a secondary user input, such as a hand gesture. A camera-based tracking system may track the gaze direction of a user to detect which object displayed in the user interface is being viewed. The tracking system also recognizes hand or other body gestures to control the action or motion of that object, using, for example, a separate camera and/or sensor. The user interface is then updated based on the tracked gaze and gesture data to provide the feedback.

US 2016/004321 A1 discloses an information processing device that detects a motion of a user which includes a detecting unit that detects the motion of the user and a face direction of the user from an image photographed by an imaging unit, a detected motion determining unit that determines whether or not the motion detected by the detecting unit is an operation on the information processing device based on the face direction of the user and position information of the information processing device stored in a storage unit, and a display content control unit that causes a display unit to reflect the motion when the detected motion determining unit determines that the motion detected by the detecting unit is the operation on the information processing device.

JP 2007-099199 A discloses a screen moving type display device which comprises a sight line detection unit for detecting a sight line, a pointing direction detection unit for detecting a pointing direction, and a directional agreement determination unit for detecting the agreement of the sight line with the pointing direction by detection signals of the detection units. When the sight line and the pointing direction are agreed with the display screen to be moved, and the sight line and the pointing direction are moved to a desired position in this state, the display screen in which the sight line is agreed with the pointing direction is selected as a screen to be moved. When the display screen is moved to a desired position while the sight line is agreed with the pointing direction, the screen to be moved is moved to a position at which the sight line is not agreed with the pointing direction.

In the automotive field, apparatuses are known that display a GUI on a windscreen of the vehicle, such as a car, or on a head-up display of the vehicle. Both windscreen and head-up display may be designed to have a quite large display surface for displaying the GUI as compared to a display installed in a central head unit of the vehicle. Such large display surface is beneficial if, for example, a high amount of content shall be displayed on the GUI, or if the content shall be displayed in greater detail.

However, when it is desired to control elements of a GUI on a quite large display surface, the user then has to perform hand or arm movements of very high amplitude in order to be able to "reach" each GUI element displayed on the display surface. Such wide hand or arm movements may, however, cause tiredness and may be impractical in limited available space like in a car cockpit. Further, there may be issues with respect to limited precision of user input due to the wide range to be sensed by a sensor device, as well as a need for extra sharp resolution of the sensor, e.g. camera, to be able to cover the complete amplitude of the motion with enough precision to be used for pointing at objects. This may then result in higher cost of sensor hardware, e.g. through the necessity of use of higher developed camera systems.

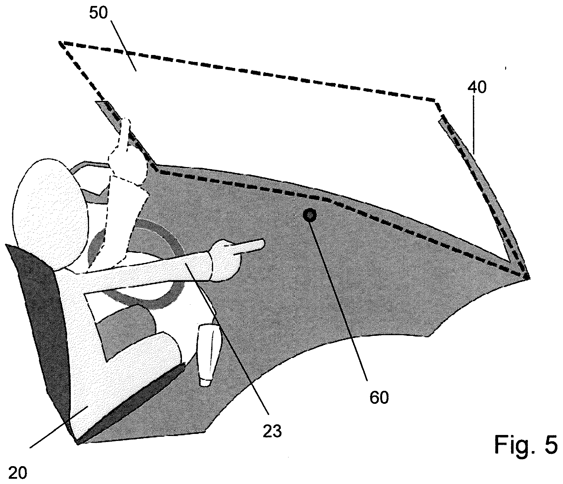

In this regard, Fig. 5 shows a schematic depiction of a graphical user interface 50 displayed on a windscreen 40 of a car. For example, a camera sensor 60 tracks and determines a particular gesture of the user 20 performed by his or her arm 23 which is moved in front of the GUI 50 to a particular location in front of the windscreen 40 for initiating a certain input function or control function of the GUI.

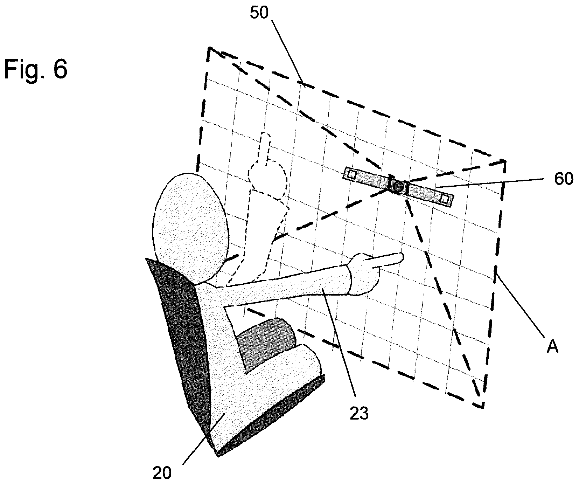

As schematically shown in Fig. 6, the camera sensor 60 has to cover a quite large area A in front of the windscreen 40 in order to detect gestures somewhere in front of the whole surface of the windscreen 40 within area A. This also implies a high amplitude of the arm and hand movement to point over the whole surface of the windscreen 40. The camera sensor 60 should have a great field of view which is necessary to track any gestures over the whole display surface, which also requires a high resolution of the sensor or, if a lower sensor resolution is used, results in a quite low precision of a coordinate determination .

US 2014/292665 A discloses a control system, components and methodologies which enable control of vehicle and in-vehicle system functionality via gesture recognition, particularly determining what functionality a user wishes to control by tracking the user's gaze to identify a selected function or function set. In combination with identifying the selected function and function set, one or more sensors installed in the vehicle detect one or more user gestures initiated by a user to interact with and/or control the selected function/function set.

US 2016/185220 A1 discloses a tracking system with associated sensory feedback and method for activating a component and adjusting the component's mode of operation within a vehicle with a tracking system. Sensory feedback may be provided based on the user's gaze or input detected by the tracking system- and/or in response to the change in the component's mode of operation. The system and method may further include the ability to control and adjust the component through gesture-based control.

US 2016/098093 A1 discloses a display apparatus which includes a communication interface unit configured to receive eye gaze information of a user and user gesture information from an external apparatus. A controlling unit is configured to control a display unit so that a preset object is displayed on the preset screen if it is determined that an eye gaze of the user is directed toward the preset screen using the received eye gaze information and a user gesture corresponding to the received gesture information is sensed. It is therefore an object of the present invention to provide a graphical user interface system and a method of displaying a graphical user interface on a display device, particularly for use in a vehicle, which are capable to improve user comfort and reduce hardware costs in implementations which use quite large display screens.

The scope of the invention is defined by the independent claims. Further aspects of the invention are outlined in the dependent claims. Embodiments which do not fall within the scope of the claims do not describe part of the present invention.

The invention relates to a graphical user interface system and a method of dis playing a graphical user interface on a display device, particularly for use in a vehicle, according to the appended claims. The invention also relates to a vehicle comprising such graphical user interface system and a computer program product comprising software code sections which are configured to perform a method according to the invention. Embodiments thereof are disclosed in the dependent claims.

According to an aspect of the invention, there is disclosed a graphical user interface system, comprising a processing device configured to provide a graphical user interface to a display device for displaying the graphical user interface on the display device, a tracking device coupled to the processing device and configured to track at least a part of a user's head and to provide tracking data indicative of a user's line of vision, and a gesture recognition device coupled to the processing device and configured to detect a user's gesture and to provide user gesture data in accordance with a detected user's gesture. The processing device is configured to segment the graphical user interface into a plurality of segments, and to determine at least one of the segments as an active input segment responsive for user input in accordance with the tracking data indicative of the user's line of vision, and to determine the other ones of the segments as non-active input segments which are non-responsive for user input. The processing device is further configured to associate at least one element of the graphical user interface within the active input segment with a detected user's gesture for user input and to initiate at least one input function based on the user gesture data.

According to another aspect of the invention, there is disclosed a method comprising displaying a graphical user interface on a display device, tracking at least a part of a user's head and providing tracking data indicative of a user's line of vision, detecting a user's gesture and providing user gesture data in accordance with the detected user's gesture, segmenting the graphical user interface into a plurality of segments, and determining at least one of the segments as an active input segment responsive for user input in accordance with the tracking data indicative of the user's line of vision, and determining the other ones of the segments as non-active input segments which are non-responsive for user input, and associating at least one element of the graphical user interface within the active input segment with a detected user's gesture for user input and initiating at least one input function based on the user gesture data.

Aspects of the invention thus provide a graphical user interface system and a method of displaying a graphical user interface on a display device, particularly for use in a vehicle, which are capable to improve user comfort and reduce hardware costs in implementations which use quite large display screens.

Particularly, the gesture recognition device may be implemented using a lower cost sensor with comparatively low resolution as the gesture recognition needs to be performed in reduced space. Nevertheless, though using a lower cost sensor with comparatively low resolution, an improved granularity and higher precision of the gesture recognition can be achieved, since the space or volume for the gesture recognition is smaller. In addition, the user needs to perform hand or arm movements of only lower amplitude in order to be able to reach each GUI element displayed on the display device.

In particular, the user is able to control also wide GUI display surfaces within a small area of freedom of movements . For instance, amplitude of arm movement is reduced from, e.g., 130 cm to, e.g., 30 cm in case of a windshield display device. Thus, the invention can reduce any large amplitudes of the arm when performing gestures that can cause tiredness and also ergonomic issues. For example, the invention allows the user to control a large GUI display area with small movements, e.g., by simple movement of the hand so that the arm can rest on, e.g., the arm lean.

According to an embodiment, the gesture recognition device is configured to determine at least one input coordinate according to the detected user's gesture, the processing device is configured to determine at least one parameter which is indicative of the active input segment from the tracking data provided by the tracking device, and the processing device is configured to determine at least one coordinate of the at least one element of the graphical user interface within the active input segment based on the at least one parameter and the at least one input coordinate.

For example, advantageously, the tracking device determines the orientation of the user's head, which will determine the active input segment of the wide GUI surface to control (area of user's focus), whereas the gesture recognition device (e.g. a finger/hand tracker) determines the coordinate of the pointed GUI element in this region of interest, thus having to perform less amplitude in the motions. Both data may be merged within the processing device to determine the relative coordinate of the pointed GUI element within the active input segment.

The gesture recognition device is configured to detect a user's gesture within a first range which corresponds to a range of the active input segment. Thus, a gesture recognition sensor can be used which requires only a reduced detection range. Such detection range can be set in accordance with (e.g. substantially equal to) the range of the active input segment, or the range of the active input segment can be adjusted (e.g. made substantially equal) to the detection range of the available sensor.

The gesture recognition device is configured to detect a user's gesture within the first range and the processing device is configured to provide the graphical user interface on the display device within a second range, wherein the first range is smaller than the second range. Thus, the user needs to perform hand or arm movements of only lower amplitude within the first range in order to be able to reach each GUI element displayed on the display device within the second range.

According to an embodiment, the processing device is configured to change from the at least one of the segments as active input segment to at least another one of the segments as active input segment in the event that the tracking data indicate a change of the user's line of vision from the at least one of the segments to the at least another one of the segments. Thus, the user can "switch" from the active input segment to another active input segment to control the GUI over the whole surface of the display device.

According to an embodiment, the tracking device is configured to track at least one viewing direction or point of gaze of the user's head. According to another embodiment, the tracking device is configured to track at least one of an eye position and eye movement of the user's eye. To this end, commonly known techniques for head tracking and/or eye tracking using one or more cameras may be employed.

According to an embodiment, the tracking device and gesture recognition device are implemented in different devices. Advantageously, dedicated sensors for each task may be used which may be positioned at a dedicated position suitable for the respective task.

According to another embodiment, the tracking device and gesture recognition device are implemented by a common sensor device which is configured to track at least a part of a user's head and provide the tracking data indicative of a user's line of vision and to detect a user's gesture and provide the user gesture data in accordance with a detected user's gesture. This allows to reduce the costs even further, since both devices could be merged into one hardware which would have as advantage to reduce the overall integration space of the functionality, as well as the overall costs (with using only one sensor instead of two) .

According to an embodiment, the processing device is configured to provide the graphical user interface to a display device, which is a windscreen or a head-up display of a vehicle, for displaying the graphical user interface on the windscreen or head-up display. Advantageously, in this way the user can control wide graphical user interfaces in vehicles with only limited available space like in a car cockpit.

According to an embodiment, the processing device is configured to provide the graphical user interface to the windscreen or head-up display for displaying the graphical user interface extending over the width of the windscreen or head-up display, respectively. In particular, the processing device is configured to segment the graphical user interface into the plurality of segments such that the segments are vertically delimited from each other. Preferably, the segments are substantially rectangular in shape. In this way, an ergonomic subdivision of the graphical user interface over a wide windscreen or head-up display can be achieved

According to an embodiment, the graphical user interface system is installed in a vehicle, and the processing device is configured to change a size of one or more of the plurality of segments according to at least one of a steering angle and a speed of the vehicle. Advantageously, the size of the one or more of the plurality of segments decreases with increasing steering angle and greater vehicle speed, respectively. Accordingly, the graphical user interface system can take account of the fact that the driver's vision may be limited when the vehicle speed is quite high, or when the steering angle is quite large, e.g., when changing directions.

According to another aspect, there is provided a computer program product comprising software code sections which are configured to perform a method according to the invention as described herein. In particular, such method or computer program may be implemented in principle in any processing device, e.g., on a vehicle or in a sensor device, such as a camera, which is appropriate to perform the respective function. Such processing device may be, for example, implemented in, or part of, a processor of an ECU (Electronic Control Unit) and/or of a head unit of the vehicle or of a camera sensor, or may be a separate component (e.g. coupled to the CAN-Bus of the vehicle), or may be a distributed system using one or more processors and/or integrated circuits. The computer program may be stored on a computer readable medium.

For example, each one of the tracking device and gesture recognition device may be, at least partially, implemented in hardware and/or in software. Each one or both may be, for example, implemented in, or part of, an ECU of the vehicle or the head unit, or may be a separate component (in hardware and/or software), or may be a common component, or may be a distributed system (in hardware and/or software) using one or more processors and/or integrated circuits.

Any aspects and embodiments described herein with respect to the method can equally be employed in the graphical user interface system with the processing device, tracking device and/or gesture recognition device configured (by software and/or hardware) appropriately. Conversely, any functions performed by the graphical user interface system with the processing device, tracking device and/or gesture recognition device can be performed in respective method steps without being limited to the particular entity performing the respective function in the described graphical user interface system.

Exemplary embodiments of the invention are described in greater detail below with reference to the enclosed Figures, in which:
- Fig. 1: shows a schematic depiction of a graphical user interface system according to an embodiment of the invention implemented in a car environment and with the windscreen embodied as display device,
- Fig. 2: shows a part of the graphical user interface system according to Fig. 1 in greater detail with respect to a sensor detection range,
- Fig. 3: shows a graphical user interface system according to an embodiment of the invention,
- Fig. 4: shows three schematic depictions in Figs. 4A-4C of a part of the graphical user interface system according to Fig. 1 with different active input segments,
- Fig. 5: shows a schematic depiction of a graphical user interface system according to commonly known prior art implemented in a car environment,
- Fig. 6: shows a part of the graphical user interface system according to Fig. 5 in greater detail with respect to a sensor detection range.

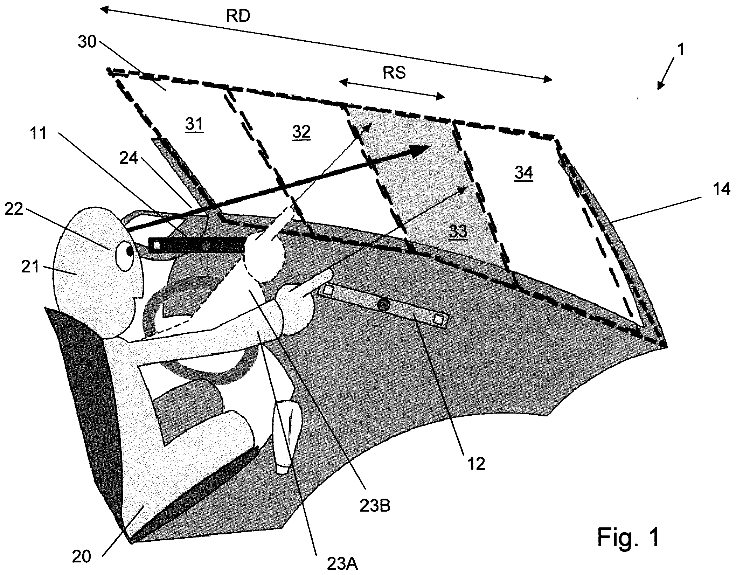

Fig. 1 shows a schematic depiction of a graphical user interface system 1 according to an embodiment of the invention implemented in a car environment. In this embodiment, a display device 14 is embodied as a windscreen, e.g. of a car. The windscreen 14, as commonly known in the art, can be used as a display device, for example, if a projecting device (not shown) projects a graphical user interface (GUI) 30 onto the windscreen 14 which (at least partially) reflects the projected light rays emitted from the projecting device towards the driver or passenger 20 of the car. A similar principle is applicable for a head-up display of a car, which may extend over at least a part of the width of the windscreen 14.

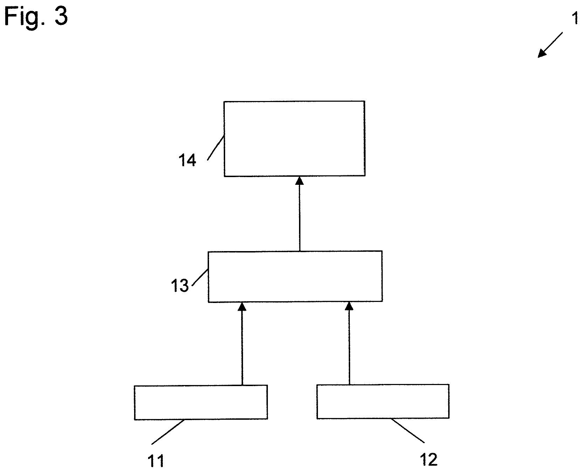

With reference now to Figures 1 to 3, a processing device 13 (not shown in Fig. 1, but in Fig. 3) provides the graphical user interface 30 to the display device, here windscreen 14, for displaying the graphical user interface 30 thereon, such that the user 20 (here: driver or passenger) can select one or more elements (not explicitly shown) from the GUI 30. With selecting one or more elements from the GUI 30, the user 20 can control, for example, an arrangement of GUI elements on the GUI 30, or can initiate a particular input function provided by the GUI. For example, the user can "press" a particular input button displayed on the GUI 30 by a corresponding gesture (such as a push gesture), or can decrease or increase a volume of an audio output of the head unit, e.g. by a corresponding sliding gesture from a position 23A of the user's arm (with the user's finger pointing to a particular element on the GUI 30) to a position 23B. As such, at least one element of the GUI 30 is associated with a detected user's gesture for user input. For example, a volume slider element (not shown) of the GUI 30 may be moved corresponding to the detected user's gesture.

For detecting a user's gesture, the system 1 comprises a gesture recognition device 12 which is operatively coupled to the processing device 13 and configured to detect a user's gesture (e.g. positions 23A and 23B of the user's arm and any positions in between, for example significant for a sliding movement) and to provide corresponding user gesture data to the processing device 13 in accordance with a detected user's gesture. In the present embodiment, the gesture recognition device 12 is implemented using a camera and one or a plurality of LEDs, with the camera having, e.g., a fisheye lens. However, any other implementations of a gesture recognition device commonly known in the art may also be used. For example, in a cost efficient implementation, the gesture recognition device 12 comprises one or more radiation emitting elements (such as LEDs) and at least one radiation receiving device (such as a photodiode), wherein the radiation receiving device is arranged to receive radiation emitted from the radiation emitting elements and which is reflected from an object to be detected, such as the user's arm. The camera may be used together with the data from the radiation emitting elements and radiation receiving device to detect a user's gesture from camera images and the reflected radiation. In general, the user gesture data may encompass any kind of data which are associated with the gesture recognition, such as including position data and kind of gesture.

The system 1 further comprises a tracking device 11 which is operatively coupled to the processing device 13. The tracking device 11 tracks at least a part of a user's head 21 and provides tracking data to the processing device 13 which are indicative of a user's line of vision 24. In particular, a user 20, such as a driver or passenger travelling in the vehicle, is located in the vehicle as shown in Fig. 1 and may be captured by the tracking device 11. In principle, the tracking device 11 can have the same or a similar configuration in hardware and/or software as the gesture recognition device 12, as discussed above. The two devices 11, 12 may also be combined in a common device (not shown), such as a device which is capable of performing both functions of the tracking device and gesture recognition device.

Preferably, the part of the head 21 to be tracked should be indicative of a line of vision 24 (Fig. 1) of the user 20. For example, the tracking device 11 is or comprises an in-vehicle camera (or a camera and one or a plurality of LEDs) for tracking at least one viewing direction of the user 20. According to an embodiment, at least one of an eye position and eye movement of a user's eye 22 may be tracked. To this end, commonly known techniques for head tracking and/or eye tracking using such camera(s) may be employed.

For example, the tacking device 11 for tracking at least one viewing direction of the user 20 is placed in front of the user and captures image data of the user's eye or eyes 22, e.g. in a sequence of images. From these images, tracking data may be retrieved which are indicative of a viewing direction of the user 20. In general, the tracking data may encompass any data which are associated with the tracking of the at least one part of the human's head, e.g. the user's eye(s) 22. For example, the tracking data may include position data related to the tracked eye 22.

In principle, both, tracking device 11 (such as a "head tracker") and gesture recognition device 12 (such as a "hand tracker") are already known technologies; they are typically used for various remote control applications, but mainly independently from one another, and include or are coupled with a computing unit with algorithms tracking the head, eye, hand, or finger, respectively, for determining the coordinates of the user's line of vision or point of gaze, or coordinates pointed by e.g. a finger.

The processing device 13, receiving the tracking data from the tracking device 11 and the user gesture data from the gesture recognition device 12, is configured to segment the graphical user interface 30 into a plurality of segments 31-34 as shown in Fig. 1. For example, the graphical user interface 30 is provided to the windscreen 14 for displaying the graphical user interface 30 extending over substantially the whole width RD of the windscreen 14. Preferably, the graphical user interface 30 is segmented into the plurality of segments 31-34 such that the segments are vertically delimited from each other. According to a preferred embodiment, the segments 31-34 are substantially rectangular in shape. In the present embodiment, the GUI 30 is partitioned into four segments (or partitions or pages) 31, 32, 33 and 34.

At least one of the segments 31-34 is determined to be an active input segment which is responsive for user input. In the present embodiment, the segment 33 is determined by the processing device 13 to be an active input segment in accordance with the tracking data indicative of the user's line of vision 24. For example, the processing device 13 determines data, such as a gaze direction or point of gaze of the user 20 on the windscreen 14, which are indicative of the user's line of vision 24. The processing device 13 may also determine a region of focus on the windscreen 14, which is also indicative of the user's line of vision. The processing device 13 uses these data for determining the active input segment. Practically, one of the segments 31-34 currently focused by the user is determined to be an active input segment. In this example, the user 20 focuses an element within the segment 33 (that is, line of vision 24 is directed to the segment 33, or region of focus is located in the segment 33), so that the processing device 13 determines that the segment 33 is the active input segment responsive for user input. The processing device 13 further determines that the other ones of the segments 31-34, that is segments 31, 32 and 34, are non-active input segments which are non-responsive for user input.

In order to initiate at least one input function based on the user gesture data provided by the gesture recognition device 12, the processing device 13 associates at least one element of the GUI 30 within the active input segment 33 with a detected user's gesture for user input. For example, as described above, the user 20 decreases or increases a volume of an audio output of the head unit by a corresponding sliding gesture from a position 23A of the user's arm, with the user's finger pointing to a particular element of the GUI 30, to a position 23B.

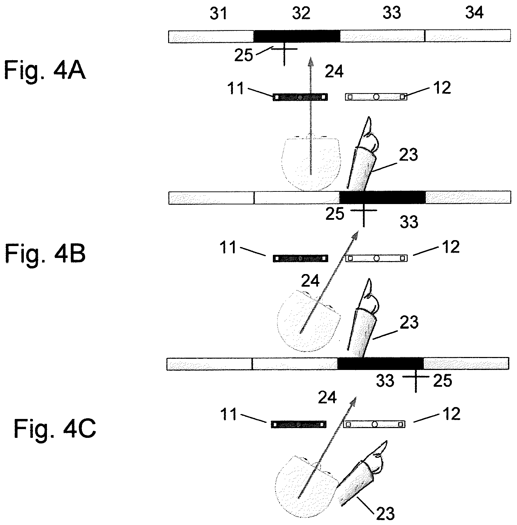

Referring now to Fig. 4A, the same input may be performed by the user 20 if the segment 32 is determined to be the active input segment, since the user's line of vision 24 is determined to be directed to the segment 32. In this case, the user's finger/arm position 23 determined by the gesture recognition device 12 corresponds to a coordinate 25 relating to segment 32, so that a GUI element within segment 32 which is located at the coordinate 25 is associated with the user's gesture. In Figures 4B and 4C, the user's line of vision 24 is determined to be directed to the segment 33. In this case, the user's finger/arm position 23 determined by the gesture recognition device 12 corresponds to a respective coordinate 25 relating to segment 33, so that a GUI element within segment 33 which is located at the coordinate 25 is associated with the user's gesture. As shown in Figures 4A -4B, the processing device 13 changes from the segment 32 as active input segment to the segment 33 as active input segment in the event that the tracking data indicate a change of the user's line of vision 24 from the segment 32 to the segment 33.

As such, the gesture recognition device 12 determines at least one input coordinate according to the detected user's gesture (for example, a position coordinate of the user's finger or arm), and the processing device 13 determines at least one parameter (such as a segment ID 31, 32, 33, 34) which is indicative of the active input segment derived from the tracking data provided by the tracking device 11. The processing device 13 then determines at least one coordinate 25 of at least one GUI element for user input within the active input segment based on the parameter and the input coordinate.

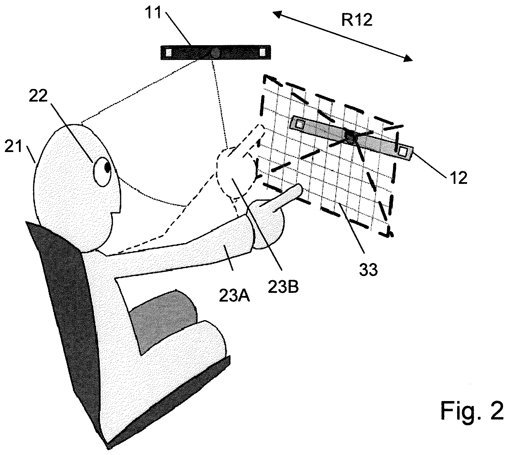

Therefore, the gesture recognition device 12 detects a user's gesture within a range R12 and the GUI 30 is provided on the windscreen 14 within a range RD which is greater than the range R12. Advantageously, as shown in Figures 1 and 2, the range R12 corresponds to a range RS of the active input segment 33 and of the other segments 31, 32 and 34 should they become a respective active input segment. Thus, the gesture recognition device 12 is required to cover only a limited range RS, which makes it possible to use only a lower cost sensor and/or to increase the granularity and precision of the gesture detection.

According to an embodiment, a size of one or more of the plurality of segments 31-34 may be changed according to the steering angle and/or a speed of the vehicle. For example, the larger the steering angle is, or the higher the vehicle speed is, the smaller is the size of the respective segment or segments. In this way, the system takes into account that the driver's field of vision may be limited when the vehicle speed is high or the steering angle is large.

The invention provides the advantage that costs can be reduced, because a low cost gesture recognition device (e.g. camera) can be used for the gesture tracking. Advantageously, according to the invention as described above, for the gesture recognition device any field of view requirement is reduced, and any active volume within which a gesture is to be detected can be reduced, so that distance of tracking is reduced and relative resolution can be increased.

## Claims

1. A graphical user interface system (1), comprising
- a processing device (13) configured to provide a graphical user interface (30) to a display device (14) for displaying the graphical user interface (30) on the display device (14),
- a tracking device (11) coupled to the processing device (13) and configured to track at least a part of a user's head (21) and to provide tracking data indicative of a user's line of vision (24),
- a gesture recognition device (12) coupled to the processing device (13) and configured to detect a user's gesture (23A, 23B) and to provide user gesture data in accordance with a detected user's gesture,
- wherein the processing device (13) is configured to segment the graphical user interface (30) into a plurality of segments (31-34), and to determine at least one of the segments (31-34) as an active input segment (33) responsive for user input in accordance with the tracking data indicative of the user's line of vision (24), and to determine the other ones of the segments (31-34) as non-active input segments which are non-responsive for user input,
- wherein the gesture recognition device (12) is configured to detect a user's gesture (23A, 23B) within a first range (R12) which corresponds to a range (RS) of the active input segment (33), wherein the first range (R12) is set in accordance with the range (RS) of the active input segment (33) or the range (RS) of the active input segment (33) is adjusted to the first range (R12), and
- the processing device (13) is configured to provide the graphical user interface (30) on the display device (14) within a second range (RD), wherein the first range (R12) is smaller than the second range (RD),
- wherein the processing device (13) is configured to associate at least one element of the graphical user interface (30) within the active input segment (33) with the detected user's gesture (23A, 23B) for user input and to initiate at least one input function based on the user gesture data.

2. The graphical user interface system according to claim 1, wherein
- the gesture recognition device (12) is configured to determine at least one input coordinate according to the detected user's gesture,
- the processing device (13) is configured to determine at least one parameter which is indicative of the active input segment (33) from the tracking data provided by the tracking device (11), and
- the processing device (13) is configured to determine at least one coordinate of the at least one element of the graphical user interface (30) within the active input segment (33) based on the at least one parameter and the at least one input coordinate.

3. The graphical user interface system according to one of claims 1 to 2, wherein the processing device (13) is configured to change from the at least one of the segments (31-34) as active input segment to at least another one of the segments (31-34) as active input segment in the event that the tracking data indicate a change of the user's line of vision (24) from the at least one of the segments (31-34) to the at least another one of the segments (31-34).

4. The graphical user interface system according to one of claims 1 to 3, wherein the tracking device (11) is configured to track at least one viewing direction (24) or point of gaze of the user's head.

5. The graphical user interface system according to one of claims 1 to 4, wherein the tracking device (11) is configured to track at least one of an eye position and eye movement of a user's eye (22).

6. The graphical user interface system according to one of claims 1 to 5, wherein the tracking device (11) and gesture recognition device (12) are implemented in different devices.

7. The graphical user interface system according to one of claims 1 to 5, wherein the tracking device (11) and gesture recognition device (12) are implemented by a common sensor device (11, 12).

8. The graphical user interface system according to one of claims 1 to 7, wherein the processing device (13) is configured to provide the graphical user interface (30) to the display device (14), which is a windscreen or a head-up display of a vehicle, for displaying the graphical user interface (30) on the windscreen or head-up display.

9. The graphical user interface system according to claim 8, wherein the processing device (13) is configured to provide the graphical user interface (30) to the windscreen or head-up display (14) for displaying the graphical user interface (30) extending over the width (RD) of the windscreen or head-up display, respectively, particularly wherein the processing device (13) is configured to segment the graphical user interface (30) into the plurality of segments (31-34) such that the segments are vertically delimited from each other, more particularly wherein the segments (31-34) are substantially rectangular in shape.

10. The graphical user interface system according to one of claims 1 to 9, wherein the graphical user interface system (1) is installed in a vehicle, and the processing device (13) is configured to change a size of one or more of the plurality of segments (31-34) according to at least one of a steering angle and a speed of the vehicle, particularly wherein the size of the one or more of the plurality of segments (31-34) decreases with increasing steering angle and greater vehicle speed, respectively.

11. A vehicle comprising a graphical user interface system (1) according to one of the preceding claims.

12. A method for controlling a graphical user interface (30) comprising:
- displaying the graphical user interface (30) on a display device (14),
- tracking at least a part of a user's head (21) and providing tracking data indicative of a user's line of vision (24),
- detecting a user's gesture (23A, 23B) and providing user gesture data in accordance with the detected user's gesture,
- segmenting the graphical user interface (30) into a plurality of segments (31-34), and determining at least one of the segments (31-34) as an active input segment (33) responsive for user input in accordance with the tracking data indicative of the user's line of vision (24), and determining the other ones of the segments (31-34) as non-active input segments which are non-responsive for user input,
- detecting a user's gesture (23A, 23B) within a first range (R12) which corresponds to a range (RS) of the active input segment (33), wherein the first range (R12) is set in accordance with the range (RS) of the active input segment (33) or the range (RS) of the active input segment (33) is adjusted to the first range (R12),
- providing the graphical user interface (30) on the display device (14) within a second range (RD), wherein the first range (R12) is smaller than the second range (RD), and
- associating at least one element of the graphical user interface (30) within the active input segment (33) with the detected user's gesture (23A, 23B) for user input and initiating at least one input function based on the user gesture data.

13. A computer program product comprising software code sections which, when executed by a processor, are configured to perform a method according to claim 12.

## Patentansprüche

1. Grafisches Benutzerschnittstellensystem (1), aufweisend:
- eine Verarbeitungsvorrichtung (13), die dazu ausgebildet ist, eine grafische Benutzerschnittstelle (30) an einer Anzeigevorrichtung (14) bereitzustellen, um die grafische Benutzerschnittstelle (30) auf der Anzeigevorrichtung (14) anzuzeigen,
- eine Verfolgungsvorrichtung (11), die mit der Verarbeitungsvorrichtung (13) gekoppelt ist und dazu ausgebildet ist, mindestens einen Teil des Kopfes (21) eines Benutzers zu verfolgen und Verfolgungsdaten bereitzustellen, die eine Blickrichtung (24) des Benutzers anzeigen,
- eine Gestenerkennungsvorrichtung (12), die mit der Verarbeitungsvorrichtung (13) gekoppelt ist und dazu ausgebildet ist, eine Benutzergeste (23A, 23B) zu detektieren und Benutzergestendaten in Abhängigkeit von einer detektierten Benutzergeste bereitzustellen,
- wobei die Verarbeitungsvorrichtung (13) dazu ausgebildet ist, die grafische Benutzerschnittstelle (30) in eine Mehrzahl von Segmenten (31-34) zu unterteilen und mindestens eines der Segmente (31-34) als aktives Eingabesegment (33), das auf eine Benutzereingabe anspricht, in Abhängigkeit von den Verfolgungsdaten zu bestimmen, die die Blickrichtung (24) des Benutzers anzeigen, sowie die anderen der Segmente (31-34) als nicht aktive Eingabesegmente zu bestimmen, die nicht auf eine Benutzereingabe ansprechen,
- wobei die Gestenerkennungsvorrichtung (12) dazu ausgebildet ist, eine Benutzergeste (23A, 23B) innerhalb eines ersten Bereichs (R12) zu detektieren, der einem Bereich (RS) des aktiven Eingabesegments (33) entspricht, wobei der erste Bereich (R12) in Abhängigkeit von dem Bereich (RS) des aktiven Eingabesegments (33) vorgegeben ist oder der Bereich (RS) des aktiven Eingabesegments (33) auf den ersten Bereich (R12) eingestellt ist, und
- wobei die Verarbeitungsvorrichtung (13) dazu ausgebildet ist, die grafische Benutzerschnittstelle (30) auf der Anzeigevorrichtung (14) innerhalb eines zweiten Bereichs (RD) bereitzustellen, wobei der erste Bereich (R12) kleiner ist als der zweite Bereich (RD),
- wobei die Verarbeitungsvorrichtung (13) dazu ausgebildet ist, mindestens ein Element der grafischen Benutzerschnittstelle (30) innerhalb des aktiven Eingabesegments (33) der detektierten Benutzergeste (23A, 23b) zur Benutzereingabe zuzuordnen und mindestens eine Eingabefunktion auf der Basis der Benutzergestendaten zu initiieren.

2. Grafisches Benutzerschnittstellensystem nach Anspruch 1,
- wobei die Gestenerkennungsvorrichtung (12) dazu ausgebildet ist, mindestens eine Eingabekoordinate in Abhängigkeit von der detektieren Benutzergeste zu bestimmen,
- wobei die Verarbeitungsvorrichtung (13) dazu ausgebildet ist, mindestens einen das aktive Eingabesegment (33) anzeigenden Parameter aus den von der Verfolgungsvorrichtung (11) bereitgestellten Verfolgungsdaten zu bestimmen, und
- wobei die Verarbeitungsvorrichtung (13) dazu ausgebildet ist, mindestens eine Koordinate des mindestens einen Elements der grafischen Benutzerschnittstelle (30) innerhalb das aktiven Eingabesegments (33) auf der Basis des mindestens einen Parameters und der mindestens einen Eingabekoordinate zu bestimmen.

3. Grafisches Benutzerschnittstellensystem nach einem der Ansprüche 1 bis 2, wobei die Verarbeitungsvorrichtung (13) dazu ausgebildet ist, von dem mindestens einen der Segmente (31-34) als aktivem Eingabesegment zu mindestens einem anderen der Segmente (31-34) als aktives Eingabesegment in dem Fall zu wechseln, dass die Verfolgungsdaten eine Änderung der Blickrichtung (24) des Benutzers von dem mindestens einen der Segmente (31-34) zu dem mindestens einen anderen der Segmente (31-34) anzeigen.

4. Grafisches Benutzerschnittstellensystem nach einem der Ansprüche 1 bis 3, wobei die Verfolgungsvorrichtung (11) dazu ausgebildet ist, mindestens eine Blickrichtung (24) oder einen Blickpunkt des Kopfes des Benutzers zu verfolgen.

5. Grafisches Benutzerschnittstellensystem nach einem der Ansprüche 1 bis 4, wobei die Verfolgungsvorrichtung (11) dazu ausgebildet ist, mindestens eines von einer Augenposition und einer Augenbewegung eines Auges (22) des Benutzers zu verfolgen.

6. Grafisches Benutzerschnittstellensystem nach einem der Ansprüche 1 bis 5, wobei die Verfolgungsvorrichtung (11) und die Gestenerkennungsvorrichtung (12) in verschiedenen Vorrichtungen implementiert sind.

7. Grafisches Benutzerschnittstellensystem nach einem der Ansprüche 1 bis 5, wobei die Verfolgungsvorrichtung (11) und die Gestenerkennungsvorrichtung (12) durch eine gemeinsame Sensorvorrichtung (11, 12) implementiert sind.

8. Grafisches Benutzerschnittstellensystem nach einem der Ansprüche 1 bis 7, wobei die Verarbeitungsvorrichtung (13) dazu ausgebildet ist, die grafische Benutzerschnittstelle (30) an der Anzeigevorrichtung (14) bereitzustellen, bei der es sich um eine Windschutzscheibe oder eine Head-Up-Anzeige eines Fahrzeugs handelt, um die grafische Benutzerschnittstelle (30) auf der Windschutzscheibe oder der Head-Up-Anzeige anzuzeigen.

9. Grafisches Benutzerschnittstellensystem nach Anspruch 8,
wobei die Verarbeitungsvorrichtung (13) dazu ausgebildet ist, die grafische Benutzerschnittstelle (30) an der Windschutzscheibe oder der Head-Up-Anzeige (14) bereitzustellen, um die grafische Benutzerschnittstelle (30) in sich über die Breite (RD) der Windschutzscheibe bzw. der Head-Up-Anzeige erstreckender Weise anzuzeigen, wobei insbesondere die Verarbeitungsvorrichtung (13) dazu ausgebildet ist, die grafische Benutzerschnittstelle (30) in die Mehrzahl von Segmenten (31-34) derart zu unterteilen, dass die Segmente vertikal voneinander abgegrenzt sind, wobei im Spezielleren die Segmente (31-34) im Wesentlichen rechteckig ausgebildet sind.

10. Grafisches Benutzerschnittstellensystem nach einem der Ansprüche 1 bis 9, wobei das grafische Benutzerschnittstellensystem (1) in einem Fahrzeug installiert ist und die Verarbeitungsvorrichtung (13) dazu ausgebildet ist, eine Größe von einem oder mehreren der Mehrzahl von Segmenten (31-34) in Abhängigkeit von mindestens einem von einem Lenkwinkel und einer Geschwindigkeit des Fahrzeugs zu ändern, wobei insbesondere die Größe des einen oder der mehreren Segmente (31-34) mit zunehmendem Lenkwinkel bzw. höherer Fahrzeuggeschwindigkeit abnimmt.

11. Fahrzeug mit einem grafischen Benutzerschnittstellensystem (1) nach einem der vorhergehenden Ansprüche.

12. Verfahren zum Steuern einer grafischen Benutzerschnittstelle (30), das folgende Schritte aufweist:
- Anzeigen der grafischen Benutzerschnittstelle (30) auf einer Anzeigevorrichtung (14),
- Verfolgen von mindestens einem Teil des Kopfes (21) eines Benutzers und Bereitstellen von Verfolgungsdaten, die eine Blickrichtung (24) des Benutzers angeben,
- Detektieren einer Benutzergeste (23A, 23B) und Bereitstellen von Benutzergestendaten in Abhängigkeit von der detektierten Benutzergeste,
- Unterteilen der grafischen Benutzerschnittstelle (30) in eine Mehrzahl von Segmenten (31-34) und Bestimmen mindestens eines der Segmente (31-34) als aktives Eingabesegment (33), das auf eine Benutzereingabe anspricht, in Abhängigkeit von den Verfolgungsdaten, die die Blickrichtung (24) des Benutzers anzeigen, und Bestimmen der anderen Segmente (31-34) als nicht aktive Eingabesegmente, die auf Benutzereingaben nicht ansprechen,
- Detektieren einer Benutzergeste (23A, 23B) innerhalb eines ersten Bereichs (R12), der einem Bereich (RS) des aktiven Eingabesegments (33) entspricht, wobei der erste Bereich (R12) in Abhängigkeit von dem Bereich (RS) des aktiven Eingabesegments (33) vorgegeben wird oder der Bereich (RS) des aktiven Eingabesegments (33) auf den ersten Bereich (R12) eingestellt wird,
- Bereitstellen der grafischen Benutzerschnittstelle (30) auf der Anzeigevorrichtung (14) innerhalb eines zweiten Bereichs (RD), wobei der erste Bereich (R12) kleiner ist als der zweite Bereich (RD), und
- Zuordnen von mindestens einem Element der grafischen Benutzerschnittstelle (30) innerhalb des aktiven Eingabesegments (33) zu der detektierten Benutzergeste (23A, 23b) zur Benutzereingabe und Initiieren von mindestens einer Eingabefunktion auf der Basis der Benutzergestendaten.

13. Computerprogrammprodukt, das Softwarecodeabschnitte aufweist, die bei Ausführung durch einen Prozessor zum Ausführen eines Verfahrens nach Anspruch 12 ausgebildet sind.

## Revendications

1. Système d'interface utilisateur graphique (1) comprenant :
- un dispositif de traitement (13) configuré pour procurer une interface utilisateur graphique (30) à un dispositif d'affichage (14) pour afficher l'interface utilisateur graphique (30) sur le dispositif d'affichage (14) ;
- un dispositif de localisation (11) couplé au dispositif de traitement (13) et configuré pour localiser au moins une partie de la tête (21) d'un utilisateur et pour procurer des données de localisation révélatrices d'un champ de vision d'utilisateur (24) ;
- un dispositif de reconnaissance des gestes (12) couplé au dispositif de traitement (13) et configuré pour détecter des gestes d'un utilisateur (23A, 23B) et pour procurer des données gestuelles d'utilisateur en conformité avec des gestes d'utilisateur détectés ;
- dans lequel le dispositif de traitement (13) est configuré pour segmenter l'interface utilisateur graphique (30) en plusieurs segments (31-34) et pour déterminer au moins un segment parmi les segments (31-34) comme étant un segment d'entrée actif (33) adapté pour une entrée d'utilisateur en conformité avec les données de localisation révélatrices du champ de vision d'utilisateur (24), et pour déterminer les autres segments parmi les segments (31-34) comme étant des segments d'entrée non actifs qui ne sont pas adaptés pour une entrée d'utilisateur ;
- dans lequel le dispositif de reconnaissance des gestes (12) est configuré pour détecter des gestes d'un utilisateur (23A, 23B) au sein d'une première plage (R12) qui correspond à une plage (RS) du segment d'entrée actif (33), la première plage (R12) étant réglée en conformité avec la plage (RS) du segment d'entrée actif (33) ou bien la plage (RS) du segment d'entrée actif (33) étant adaptée à la première plage (R12) ; et
- le dispositif de traitement (13) est configuré pour procurer l'interface utilisateur graphique (30) sur le dispositif d'affichage (14) au sein d'une seconde plage (RD), la première plage (R12) étant plus petite que la seconde plage (RD) ;
- dans lequel le dispositif de traitement (13) est configuré pour associer au moins un élément de l'interface utilisateur graphique (30) au sein du segment d'entrée actif (33) aux gestes d'utilisateur détectés (23A, 23B) pour une entrée d'utilisateur et pour déclencher au moins une fonction d'entrée en se basant sur les données gestuelles d'utilisateur.

2. Système d'interface utilisateur graphique selon la revendication 1, dans lequel
- le dispositif de reconnaissance des gestes (12) est configuré pour déterminer au moins une coordonnée d'entrée en conformité avec les gestes d'utilisateur détectés ;
- le dispositif de traitement (13) est configuré pour déterminer au moins un paramètre qui est révélateur du segment d'entrée actif (33) à partir des données de localisation fournies par le dispositif de localisation (11) ; et
- le dispositif de traitement (13) est configuré pour déterminer au moins une coordonnée dudit au moins un élément de l'interface utilisateur graphique (30) au sein du segment d'entrée actif (33) en se basant sur ledit au moins un paramètre et sur ladite au moins une coordonnée d'entrée.

3. Système d'interface utilisateur graphique selon l'une quelconque des revendications 1 à 2, dans lequel le dispositif de traitement (13) est configuré pour opérer une modification en passant dudit au moins un segment parmi les segments (31-34) à titre de segment d'entrée actif à au moins un autre segment parmi les segments (31-34) à titre de segment d'entrée actif dans le cas où les données de localisation révèlent un changement du champ de vision d'utilisateur (24) en passant dudit au moins un segment parmi les segments (31-34) audit au moins un autre segment parmi les segments (31-34).

4. Système d'interface utilisateur graphique selon l'une quelconque des revendications 1 à 3, dans lequel le dispositif de localisation (11) est configuré pour localiser au moins une direction de visualisation (24) ou un point de regard de la tête de l'utilisateur.

5. Système d'interface utilisateur graphique selon l'une quelconque des revendications 1 à 4, dans lequel le dispositif de localisation (11) est configuré pour localiser au moins une position oculaire et un mouvement oculaire d'un oeil d'utilisateur (22).

6. Système d'interface utilisateur graphique selon l'une quelconque des revendications 1 à 5, dans lequel le dispositif de localisation (11) et le dispositif de reconnaissance des gestes (12) sont réalisés sous la forme de dispositifs différents.

7. Système d'interface utilisateur graphique selon l'une quelconque des revendications 1 à 5, dans lequel le dispositif de localisation (11) et le dispositif de reconnaissance des gestes (12) sont réalisés sous la forme d'un dispositif de détection commun (11, 12).

8. Système d'interface utilisateur graphique selon l'une quelconque des revendications 1 à 7, dans lequel le dispositif de traitement (13) est configuré pour procurer l'interface utilisateur graphique (30) au dispositif d'affichage (14) qui représente un pare-brise ou un affichage tête haute pour l'affichage de l'interface utilisateur graphique (30) sur le pare-brise ou sur l'affichage tête haute.

9. Système d'interface utilisateur graphique selon la revendication 8, dans lequel le dispositif de traitement (13) est configuré pour procurer l'interface utilisateur graphique (30) au pare-brise ou à l'affichage tête haute (14) pour l'affichage de l'interface utilisateur graphique (30) s'étendant sur la largeur (RD) du pare-brise ou de l'affichage tête haute, respectivement, en particulier dans lequel le dispositif de traitement (13) est configuré pour segmenter l'interface utilisateur graphique (30) en plusieurs segments (31-34) d'une manière telle que les segments sont délimités en direction verticale les uns par rapport aux autres, plus particulièrement dans lequel les segments (31-34) possèdent une configuration de forme essentiellement rectangulaire.

10. Système d'interface utilisateur graphique selon l'une quelconque des revendications 1 à 9, dans lequel le système d'interface utilisateur graphique (1) est monté dans un véhicule, et le dispositif de traitement (13) est configuré pour modifier une dimension d'un ou plusieurs segments parmi lesdits plusieurs segments (31-34) en conformité avec au moins un élément choisi parmi un angle de braquage et une vitesse du véhicule, en particulier dans lequel la dimension desdits un ou plusieurs segments parmi les lesdits plusieurs segments (31-34) diminue de manière proportionnelle à l'augmentation de l'angle de braquage et à l'élévation de la vitesse du véhicule, respectivement.

11. Véhicule comprenant un système d'interface utilisateur graphique (1) selon l'une quelconque des revendications précédentes.

12. Procédé pour la commande d'une interface utilisateur graphique (30) comprenant le fait de :
- afficher l'interface utilisateur graphique (30) sur un dispositif d'affichage (14) ;
- localiser au moins une partie de la tête (21) d'un utilisateur et procurer des données de localisation révélatrices d'un champ de vision (24) de l'utilisateur ;
- détecter des gestes d'un utilisateur (23A, 23B) et procurer des données gestuelles d'utilisateur en conformité avec les gestes d'utilisateur détectés ;
- segmenter l'interface utilisateur graphique (30) en plusieurs segments (31-34) et déterminer au moins un segment parmi les segments (31-34) comme étant un segment d'entrée actif (33) adapté pour une entrée d'utilisateur en conformité avec les données de localisation révélatrices du champ de vision d'utilisateur (24), et déterminer les autres segments parmi les segments (31-34) comme étant des segments d'entrée non actifs qui ne sont pas adaptés pour une entrée d'utilisateur ;
- détecter des gestes d'utilisateur (23A, 23B) au sein d'une première plage (R12) qui correspond à une plage (RS) du segment d'entrée actif (33), dans lequel la première plage (R12) est réglée en conformité avec la plage (RS) du segment d'entrée actif (33) ou bien la plage (RS) du segment d'entrée actif (33) est adaptée à la première plage (R12) ;
- procurer l'interface utilisateur graphique (30) sur le dispositif d'affichage (14) au sein d'une seconde plage (RD), la première plage (R12) étant plus petite que la seconde plage (RD) ; et
- associer au moins un élément de l'interface utilisateur graphique (30) au sein du segment d'entrée actif (33) aux gestes d'utilisateur détectés (23A, 23B) pour une entrée d'utilisateur et déclencher au moins une fonction d'entrée en se basant sur les données gestuelles d'utilisateur.

13. Produit de programme informatique comprenant des segments de codes de logiciels qui, lorsqu'ils sont exécutés par un processeur, sont configurés pour la mise en oeuvre d'un procédé selon la revendication 12.
